# EUROPEAN PATENT APPLICATION

(11) **EP 1 258 800 A1**
(43) Date of publication of application: **20.11.2002**
(21) Application number: 01901404.2
(22) Date of filing: 18.01.2001
(51) Int. Cl.: G06F 9/06, G06F 1/00, G06F 15/00, G06F 13/00

(54) **METHOD AND SYSTEM FOR DISTRIBUTING PROGRAM, SERVER AND CLIENT TERMINALS FOR EXECUTING PROGRAM, DEVICE FOR OBTAINING PROGRAM, AND RECORDING MEDIUM**

(30) Priority: 27.01.2000 JP 2000018841
(71) Applicant: Omron Corporation, Kyoto-shi, Kyoto-fu, 600-8530 (JP)
(72) Inventor: NAGANUMA, Takefumi OMRON CORP., Shimogyo Kyoto Kyoto 600-8530 (JP); YOSHIDA, Masaomi OMRON CORPORATION, Shimogyo Kyoto Kyoto 600-8530 (JP); NAKAJIMA, Akira OMRON CORPORATION, Shimogyo Kyoto Kyoto 600-8530 (JP)
(74) Representative: Calderbank, Thomas Roger
(86) International application number: JP0100278
(87) International publication number: WO01055841

(57) **Abstract**

The distribution of a program is carried out by an agent system. The server (10) has a function ( (4) ) which transmits a service ID uniquely determined inside the distribution system, and a function ( (6) ) which, in the case where there is an acquisition request for a program attached with the transmitted service ID, transmits the program together with the service ID to the client terminal making the acquisition request; and the client terminals (20) are equipped with a function ( (3)) which makes a request for the issuing of a service ID before the request of a required program, a function ( (5) ) which acquires the service ID transmitted from the server, and makes an acquisition request for the program attached with the acquired service ID, and a function which authorizes the execution of a program only in the case where the received program matches the service ID attached at the time of said acquisition request.

## Description

### TECHNICAL FIELD

The present invention is related to a program distribution system, a distribution method, a server and client terminals for executing these, a program procurement apparatus, and a recording medium.

### PRIOR ART TECHNOLOGY

Due to recent developments of the Internet, it has become possible to easily carry out the procurement of various information from a terminal on hand. Further, it is possible for fellow people existing at different locations to connect to a host computer via various terminals to carry out an online conversation service in personal computer communication called a chat or the like. In this way, by using the Internet, it has become possible to use various services.

As for the procured information, when there is the case of data, there is also the case of programs. Further, in order to execute a chat or the like, it is necessary to carry out execution after downloading an application program for carrying out such chat to the terminals in advance. Namely, there are various kinds of procured programs including those used at the downloading terminals such as functional improvements of the terminals or applications used by the users of the terminals, and programs for information exchange with a plurality of terminals, and the like.

Incidentally, in accordance with the spread and functional improvements of portable terminals, there are many situations where the various services described above are used from such portable terminals. A problem of this case is the operability of the portable terminals. Namely, common personal computers and other desktop-type computers have relatively large keyboards and do not have problems with inputting various data. However, because the entire apparatus of a portable terminal needs to be compact, the inputting of data becomes complicated.

Furthermore, recently it has become possible to connect to the Internet and receive various services even using a portable phone which is one type of portable terminal. When this is done, the complexity of the input operations described above becomes increasingly notable.

Further, in contrast with personal computers and the like, in the case where the portable phone is a relatively compact and low-priced apparatus even among other portable terminals, the usable functions of such apparatus are installed in advance at the maker side, and the user is almost never able to make additions after purchase. As a result, many functions become installed in portable terminals at the manufacturing step.

Then, such multifunction apparatus must be operated by using a few operation buttons, and operations become complicated. Moreover, these multiple functions are not limited to those that will necessarily all be used by users. Accordingly, because unnecessary functions are installed, there is the problem that the operability for the necessary functions is degraded.

It is an object of the present invention to provide a program distribution system, a server and client terminals for executing this, a program procurement apparatus and a recording medium which are highly reliable and which make it possible to easily carry out downloading and the like of programs and various other information to client terminals.

### SUMMARY OF THE INVENTION

The program distribution method according to this invention is a program distribution method for distributing a program from a server to client terminals. Further, said client terminals make a request for a service ID to the server before program distribution, said server transmits a server ID to said client terminals in accordance with the requests from said client terminals, said client terminals make a request for the distribution of a program attached with the acquired service ID to said server, said server transmits a program attached with a service ID to said server in accordance with the requests from said client terminals, and said client terminals execute the previously received program in the case where the service ID sent in together with the received program matches the previously acquired service ID, and destroys the received program in the case where there is no match.

Further, the program distribution system according to this invention is an example of a system applied for executing this distribution system. This system is a program distribution system which distributes a program from a server to client terminals. Further, said server and said client terminals are provided with an agent system, and the distribution of said program is carried out by the agent system. Furthermore, said server has a function which transmits a service ID uniquely determined inside the distribution system before the transmission of said program, and a function which, in the case where there is an acquisition request for a program attached with a transmitted service ID, transmits said program together with the service ID to said client terminal making the acquisition request. Further, said client terminals are equipped with a function which makes a request for the issuing of a service ID before the request of a required program, a function which acquires the service ID transmitted in from said server, and issues an acquisition request for the program attached with the acquired service ID, and a function which authorizes the execution of a program only in the case where the received program is attached with a service ID matching the service ID attached at the time of said acquisition request.

In this regard, the "function which transmits a service ID" corresponds to the ID acquisition function portion 15b and the ID issuing function portion 15a in the embodiments. The "function which transmits said program together with the service ID" corresponds to the "service program acquisition function portion 14b" in the embodiments. The "function which makes a request for the issuing of a service ID" corresponds to the ID acquisition function portion 25a in the embodiments. The "function which issues a program acquisition request" and the "function which authorizes the execution of a program" correspond to the service program acquisition function portion 24b in the embodiments.

Further, the server according to this invention is a server equipped with an agent system for distributing a program to client terminals. Furthermore, said server is equipped with a function which transmits a service ID uniquely determined inside the distribution system before the transmission of said program, and a function which, in the case where there is an acquisition request for a program attached with a transmitted service ID, transmits said program together with the service ID to the client terminal making the acquisition request.

Furthermore, the program procurement apparatus according to this invention is a program procurement apparatus equipped with an agent system which receives the distribution of a program from a server. Further, this apparatus is equipped with a function which makes a request for the issuing of a service ID before the request of a program, a function which acquires the service ID transmitted in from said server, and issues an acquisition request for the program attached with the acquired service ID, and a function which authorizes the execution of a program only in the case where the received program is attached with a service ID matching the service ID attached at the time of said acquisition request.

Moreover, the client terminal according to this invention is a client terminal which receives the distribution of a program from a server, and is equipped with the program procurement apparatus described above, wherein the acquisition of a program distributed from said server is carried out by the program procurement apparatus.

In accordance with this invention, a program distribution using an agent system is carried out in order to plan the simplification of the input process. In this way, because the provision of the program and also the execution of the program after provision are carried out automatically, the user process is simplified, and operability is improved. Accordingly, it is possible to ensure a smooth process even in terminals such as portable terminals where the input apparatus is compact and there is trouble with operability.

Incidentally, in a terminal that exhibits the merit of being able to carry out automatic execution by converting a program to an agent, in the case where it is assumed that a virus or the like is included in an acquired program, there is the risk that the malicious program including such virus will be automatically executed and infect the client terminal.

With regard to this malicious program, the same problem arises even in the case where a program is downloaded and procured via the Internet in accordance with commands from an ordinary user. However, in ordinary cases, the decision of whether or not to finally download and the command to execute that after downloading are basically carried out in accordance with inputs from the user. Accordingly, in the case where the terminal is charged with a certain degree of self-responsibility, and a malicious program is noticed partway, it is possible to prevent the execution of the malicious program from happening. However, in the case where execution is carried out by the agent system presumed in the present invention, because programs are automatically acquired, and the acquired programs are automatically executed, such arrangement is unsuitable to the principle of self-responsibility described above.

In this regard, using the concept of a service ID, the provision of a service ID from the server to a client terminal is carried out before the provision of the actual program. Further, the server is arranged to send a program (attached with a service ID) only in the case where there is a program acquisition request together with the service ID from the client terminal. In this way, when the client terminal is arranged to check the service ID attached to the received program, and execute the program only in the case of a correct service ID, then in the case where the received program has the wrong service ID or no service ID, such program is destroyed as a malicious program, and the risk of infection by a virus is eliminated.

Further, for the server side, by judging a program request that has no service ID or the wrong service ID to be an illegal request and stopping the transmission of the program, the provision of programs is carried out only to legitimate client terminals. Furthermore, by making it possible to receive only programs having the correct service ID, it is possible to suppress illegal copying between client terminals.

Furthermore, the recording medium of the present invention is a recording medium which is readable by a computer and which stores a program for a program distribution system which includes a command for the computer to execute a process which transmits a service ID uniquely determined inside the distribution system before the transmission of a program, and a process which, in the case where an acquisition request for a program attached with the transmitted service ID is received, transmits said program together with the service ID to the client terminal making the acquisition request. By having a computer read this recording medium, the server according to the present invention is formed.

Each of the means and functions that form the various apparatuses according to the present invention can be achieved by dedicated hardware circuits, or they can also be achieved by a programmed computer.

### BRIEF DESCRIPTION OF THE DRAWINGS

Fig. 1 is a drawing showing a preferred embodiment of the program distribution system according to the present invention.
Fig. 2 is a drawing showing the internal structure of the server.
Fig. 3 is a drawing showing the internal structure of a client terminal.
Fig. 4 is a drawing showing the data structure of a user list.
Fig. 5 is a drawing showing the data structure of a service program list.
Fig. 6 is a drawing showing the data structure of a service list.
Fig. 7 is a drawing for describing part of the functions of the ID acquisition function portion of the client terminal.
Fig. 8 is a flowchart for describing the functions of the request handler.
Fig. 9 is a flowchart for describing the functions of the service manager.
Fig. 10 is a drawing for describing the operation of the program distribution system in the present embodiments.
Fig. 11 is a drawing for describing an outline of the agent system (automatic execution process of the agent).
Fig. 12 is a drawing showing a system structure for implementing the recording medium according to the present invention.
Fig. 13 is a drawing showing a system structure for implementing the recording medium according to the present invention.

### PREFERRED EMBODIMENTS OF THE INVENTION

The present invention will be described in detail with reference to the appended drawings.

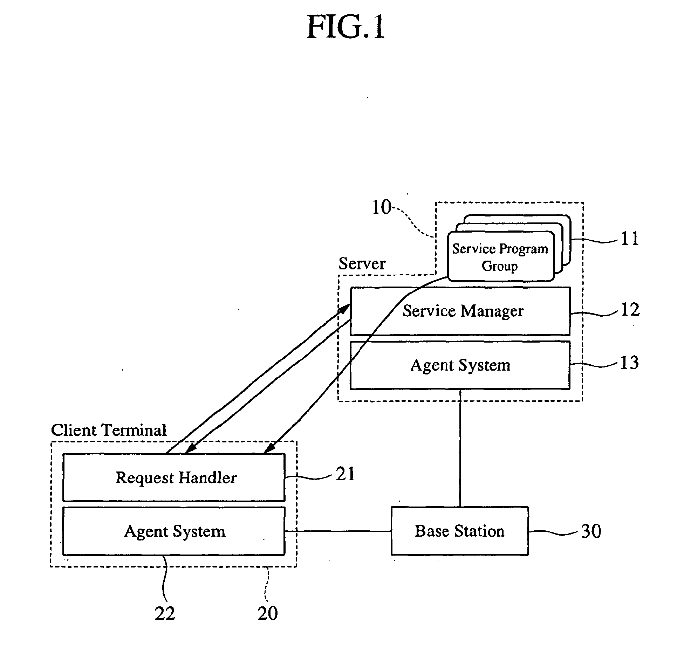

Fig. 1 shows a preferred embodiment of the present invention. As shown in Fig. 1, in the present embodiment, a server 10 which provides a program distribution service and client terminals 20 which receive programs distributed from the server 10 are connected via communication lines. Actually, the server 10 and the client terminals 20 are connected via a base station 30. The client terminals 20 in this example are, for example, portable phones or PHS or the like, but they can be applied to PDA or other various terminals. Further, the provided service programs can be assumed to be various items, for example, communication programs for executing a chat, programs for functional improvement of each portable terminal, programs and the like for execution by the portable terminals, and various other items. Furthermore, because items called programs are agents, the essential contents may be various data. Further, in the case where the portable terminal is a portable phone or the like, the various functions established in advance in the prior art are held in the server 10 as agent programs (service programs), and the user may download only required functions. In this way, unnecessary functions for the user do not exist in the portable terminal. Accordingly, it is possible to solve the complexity of the operability due to the presence of multiple unnecessary functions in the portable terminal, and the required memory capacity increase and the like which formed prior art problems.

In this system, service programs (SP) required for executing various services are stored in a service program memory portion 11 of the server 10. Further, the client terminals 20 request the required service programs (SP), and receive the service programs (SP) sent in from the server 10, after which execution is carried out inside the client terminals 20. Further, the acquisition operation of such service programs SP is executed by the agent system.

In short, the present embodiment is a system for implementing a program (agent) distribution service based on an agent system. Further, the agent system transfers programs (agents), and in order for such programs to be executed automatically at the transfer destination, the security of the transferred-in programs (agents) needs to be ensured. Namely, the reason for this is that if a virus is included in a sent-in program, the malicious program (agent) that includes this virus is loaded into the client terminals 20 and simultaneously executed, whereby the terminals become infected by the virus. In this regard, the present embodiment is equipped with functions that make it possible to acquire only legitimate programs.

Namely, the transmission and reception of information is carried out between a request handler 21 provided in the client terminals 20 and a service manager 12 provided in the server 10, and the server 10 (service manager 12) provides service programs after confirming requests from legitimate client terminals 20. Further, the client terminals 20 (client handler 21) finally carry out acquisition after confirmation of a legitimate program. In this way, it is possible to prevent the acquisition of malicious programs (ensuring of security).

Further, as described below, even for the service provider of the program distribution service, because service programs are provided only to legitimate client terminals, it is possible to deter transferring (illegal copying) to third parties. Accordingly, in the case where a program distribution service is executed as a business, it is possible to reliably carry out accounting, and a stable business development can be carried out. Further, the specifics are as follows below.

First, in the present embodiment, a uniquely determined service ID is established inside the system, and before a service program is acquired, the client terminals 20 acquire the service ID, and then a request for the service program set by the service ID is carried out. On the other hand, the server 10 receives a request to issue a service ID from the client terminals, issues a service ID, and stores the issued service ID correlated with the service program. In this way, next, in the case where there is a service program request having an attached service ID from a client terminal, the service program is distributed only in the case where there is a match with the combined contents (service ID + service program) stored as described above.

In this way, by not providing a service program in the case where there is no service ID or a different service ID, it is possible to prevent illegal copying. Further, for the client terminals 20, by loading only a service program sent in together with a correct service ID, even when a service program with no service ID or a different service ID is provided, this is assumed to be a malicious program, and rejection can be carried out. Furthermore, when only programs having an attached service ID are acquired in this way, even if an attempt is made to transfer an acquired service program, because there is no service ID, the secondary effect of preventing illegal copying is also exhibited.

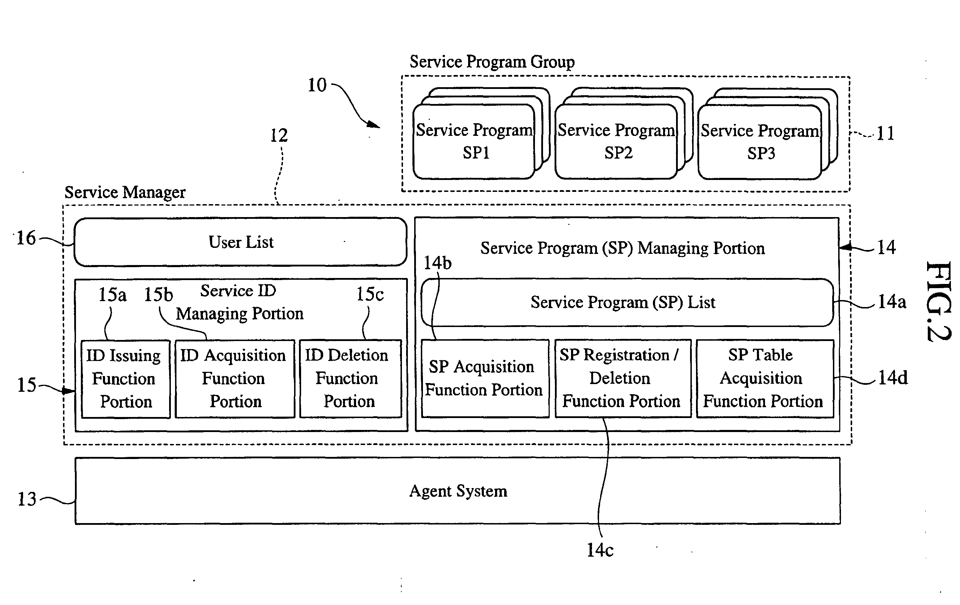

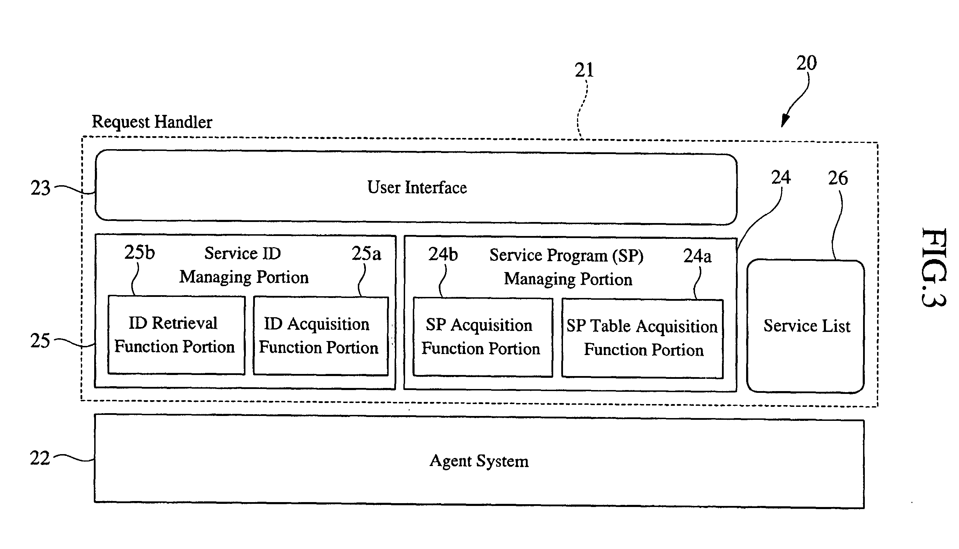

Further, the server 10 (in particular, the service manager 12) for implementing the process functions described above has the internal structure shown in Fig. 2. Further, the client terminals 20 (in particular, the request handler 21) have the internal structure shown in Fig. 3.

First, as shown in Fig. 2, in addition to the service program memory portion 11 which stores service programs for implementing the actual service, the server 10 is equipped with the service manager 12 which provides service in accordance with service acquisition requests from the client terminals 20, and an agent system 13 which transfers programs between server and client terminals, and provides messaging features.

Further, the service manager 12 is equipped with a service program managing portion 14 which manages the service programs (SP) stored in the service program memory portion 11 and provides prescribed service programs to the client terminals 20, and a user list memory portion 16 which stores service IDs that manage service IDs, and the correlation of the service IDs and the service programs.

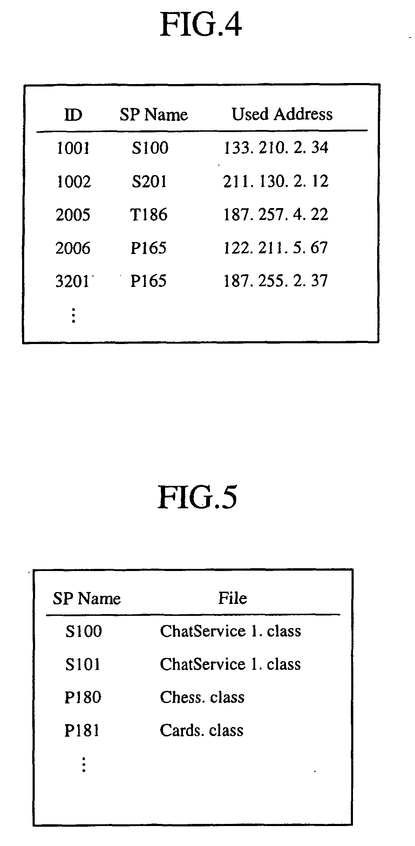

The data structure of the user list memory portion 16 is shown in Fig. 4. Namely, the user list memory portion 16 stores information related to the service programs managed (distributed) by the server 10, and the issued service IDs, the service program names and the used addresses of the client terminals are correlated and registered. Further, the used addresses are IP addresses in the example of the drawing, but it is possible to use telephone numbers and other various information and the like which make it possible to identify client terminals. The registration, updating and deletion of this user list is carried out by a service ID managing portion 15.

The service ID managing portion 15 is equipped with an ID issuing function portion 15a, an ID acquisition function portion 15b and an ID deletion function portion 15c. The ID issuing function portion 15a issues service IDs that have been uniquely determined inside the system, and issues one service ID in accordance with an issue request from the ID acquisition function portion 15b. Further, as for the concrete ID issuing method, various methods may be used, such as a method in which an ID creation/managing server is established to create unique serial numbers inside the system, and the issuing of an ID is requested to this ID creation/managing server and acquired, or a method in which IDs guaranteed to be unique by third party means such as IP addresses or domain names are held in advance, with these being read in as needed, or the like. In particular; when a third party means such as the latter is used, it is possible to operate the present system even in an environment where many unspecified servers are included such as the Internet or the like.

The ID acquisition function portion 15b procures service IDs in accordance with service ID acquisition requests (service program names + used addresses) from the client terminals 20, and sends service IDs to the client terminals 20. Further, the ID acquisition function portion 15b also has a function which correlates and registers the service program names that have been issued service IDs and the used addresses in the user list memory portion 16.

Specifically, when a service ID acquisition request from a client terminal 20 is received, first the issuing of an ID is requested to the ID issuing function portion 15a, and when a service ID is received from the ID issuing function portion 15a, the service ID created by the ID issuing function portion 15a is sent to the client terminal 20 that made the acquisition request. At this time, in the present embodiment the portable terminals are portable phones or the like, and because the series of issuing processes are carried out between the server and clients in a state where they are connected by telephone lines, by only sending the service ID, the client terminal 20 side that receives the service ID can easily know which service program is correlated with the service ID. Further, because the telephone lines maintain a connected state, it is possible to transmit the service ID without confirming the used address or the like. Furthermore, in the case where communication is cut off partway in the present embodiment, it becomes impossible to provide a program, and all the data up to that point is immediately deleted. Then, execution is carried out again from the beginning. In this way, because all processes are reliably carried out by one telephone call, the security is improved.

Further, even in the case of connections to the Internet where the line has been cut off once, by confirming the used address, and then correlating and sending the service program name and the service ID to the address destination, it is possible to ensure a certain degree of security.

Further, the acquired service ID is correlated with the service program name and the used address received from the client terminal 20, and a process for registration as a new item in the user list memory portion 16 is also carried out.

Furthermore, because the ID deletion function portion 15c deletes prescribed data registered in the user list memory portion 16, namely, when the three items of information of the service ID, the service program and the used address are received together with a deletion request, the user list memory portion 16 is accessed, and a judgment of whether or not there is data matching such three items of information is carried out. Then, when matching data is detected, such data is deleted. Further, in the case where there is no matching data, an error process is carried out.

When a function for deleting from the user list is provided in this way, there are the following results. Namely, for example in the case where a system that collects usage fees every base period (e.g., every month or every year or the like) is used as an accounting system of distributed programs instead of taking an accounting for each distribution, for example when reference is made to the data stored in the user list memory portion 16, and an accounting is billed to the registered used addresses, by using this deletion function to delete the user list, it is possible to stop future accounting.

On the other hand, the service program managing portion 14 is equipped with a service program list memory portion 14a, a service program acquisition function portion 14b, a service program registration/deletion function portion 14c, and a service program table acquisition function portion 14d. As shown in Fig. 4, the service program list memory portion 14a forms a table which correlates the service program names and the reference names (e.g., file names) of the physical programs. Further, information related to programs capable of service stored in the service program memory portion 11 is stored in this service program list memory portion 14a.

The three function portions 14b ∼ 14d execute various processes based on the list stored in this service program list memory portion 14a, namely, when a request from a client terminal 20 is received, first the service program table acquisition function portion 14d extracts the service program list stored in the service program list memory portion 14a, and sends this as a table to the client terminal 20 that made the request.

When the three items of information of the service program name, the service ID and the used address are received from a client terminal 20, the service program acquisition function portion 14b accesses the user list memory portion 16, and a check of the presence or absence of related data is carried out. Then, in the case where such data is present, the service program list memory portion 14a is accessed, and the file name corresponding to the service program name is acquired. Then, an operation is carried out to correlate and send the service ID and the service program to the client terminal 20.

The service program registration/deletion function portion 14c carries out registration and deletion for the service program list memory portion 14a. Now, in the case where registration is carried out, when the service program name and the reference name of the physical program are received, these are correlated and registered in the list. Further, in the case where deletion is carried out, when a deletion request is received from at least one of the service program name and the reference name of the physical program, the corresponding list is deleted.

On the other hand, as shown in Fig. 1 and Fig. 3, the client terminal 20 is equipped with the request handler 21 which carries out transmission and reception of information required for acquisition of service programs with the server 10 in accordance with requests from the user, and an agent system 22 which transfers programs between the server 10 and the client terminal 20, and provides messaging features.

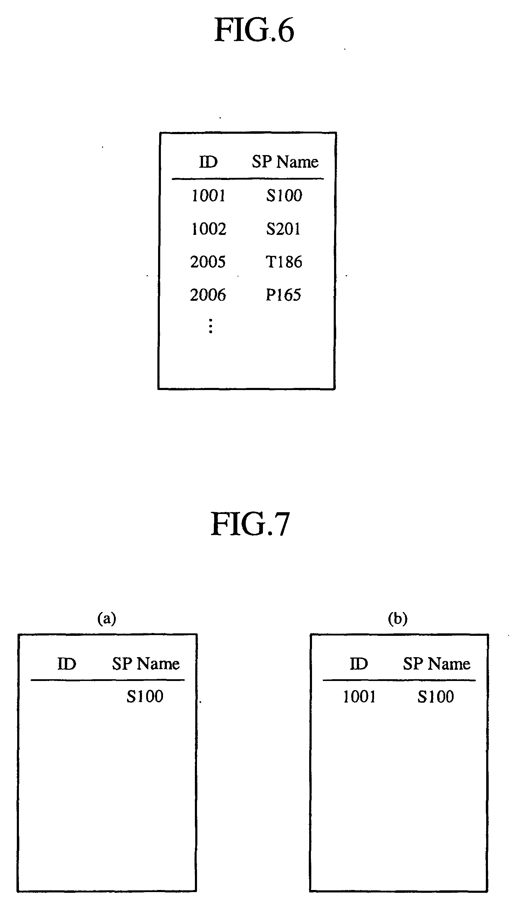

Further, as shown in Fig. 3, the request handler 21 is equipped with a user interface 23 for carrying out transmission and reception of information with the user a service program managing portion 24 for carrying out transmission and reception of information related to service programs, a service ID managing portion 25 which manages the service IDs issued from the server, and a service list memory portion 26 which stores a list (service list) of the service programs held by itself. As shown in Fig. 6, the service list memory portion 26 forms a table which correlates the service IDs and the service program names.

As for the user interface 23, there are man-machine interfaces, and in accordance with a service program acquisition request inputted from control buttons or the like not shown in the drawings, the displaying of a table of the service programs on a display is carried out, and there are interfaces and the like for receiving the input of acquisition requests of required service programs from those displayed in such table.

The service ID managing portion 25 has an ID acquisition function portion 25a and an ID retrieval function portion 25b. First, when the input of the service program name acquired via the user interface 23 is received, the ID acquisition function portion 25a has a function which issues a service ID acquisition request to the server 10 in a state where the IP address of itself (used address of itself) is attached. Further, as described above, because a service ID is sent back as a return value when the server 10 receives a service ID acquisition request, when the sent back service ID is received, there is a function that correlates and stores the received service ID and the requested service program name in the service list memory portion 26, and provides such information to a service program acquisition function portion 24b of the service program managing portion 24.

When the input of the service ID is received, the ID retrieval function portion 25b searches the service ID column of the service list memory portion 26, and carries out a judgment of whether or not there is a matching item. Then, there is a function that, in the case where a matching item is detected, sends back the service program name correlated with this, and in the case where there is no matching item, carries out an error process (e.g., notification that such item is not present). Specifically, a retrieval process is carried out in accordance with a request from the service program acquisition function portion 24b, and a reply is made to the service program acquisition function portion 24b.

On the other hand, the service program managing portion 24 is equipped with a service program table acquisition function portion 24a, and the service program acquisition function portion 24b. The service program table acquisition function portion 24a has a function that receives a table acquisition request from the user provided via the user interface 23, and issues a service program table acquisition request to the server 10. Then, because the server 10 receives this request and sends back a service program table, there is also a function that receives the reply, and outputs and displays such service program table to the user via the user interface 23.

When the service program name and the service ID that should be acquired sent in from the ID acquisition function portion 25a are received, the service program acquisition function portion 24b has a function that transmits the three items of information attached with the IP address of itself (used address of itself) to the server 10, and issues a service program acquisition request. Furthermore, because the service ID, the service program name and the service program are sent back from the server 10 in accordance with this issued request, the received service ID is transferred to the ID retrieval function portion 25b. Then, the service program name sent back from the ID retrieval function portion 25b and the service ID sent in from the server 10 are compared, and the service program is downloaded only in the case of a match. Then, after loading, the loaded program (agent) is executed automatically.

Further, in the case where there is no match, the data that was sent in from the server is destroyed. Accordingly, downloading is not carried out in the case where the service ID is not registered in the service list, in the case where the wrong service ID is sent in from the server 10 such as in the case where registration is correlated with a different service program name, and in the case where a program with no service ID is sent in. Accordingly, the risk of automatic execution of malicious programs is eliminated.

Further, in the embodiment described above, as for the timing of the ID acquisition function portion 25a storing in the service list memory portion 26, the storage of the service ID and the service program name is carried out after the service ID is acquired. Because this is carried out during one telephone call connected by telephone lines or the like, the service ID sent back from the server can be identified as a univocally determined service program name (the item requested by the terminal), and there isn't much difference partway. However, the present invention is not limited to this, and as shown in Fig. 7 for example, in the case where a service program name is registered in the service program name column of the service list (Fig. 7(a) ) when a request for a service ID is issued, and a service ID is sent back, the acquired service ID may be stored in the service ID column corresponding to the service program name (Fig. 7(b)).

At this time, when a service ID correlated with a service program name is sent back from the server, because a check of whether or not there is a match with the requested service program name can be carried out, there is even higher security. Further, this check of the service program name can be applied even to the case where the service program name and the service ID are simultaneously stored as in the embodiment described above.

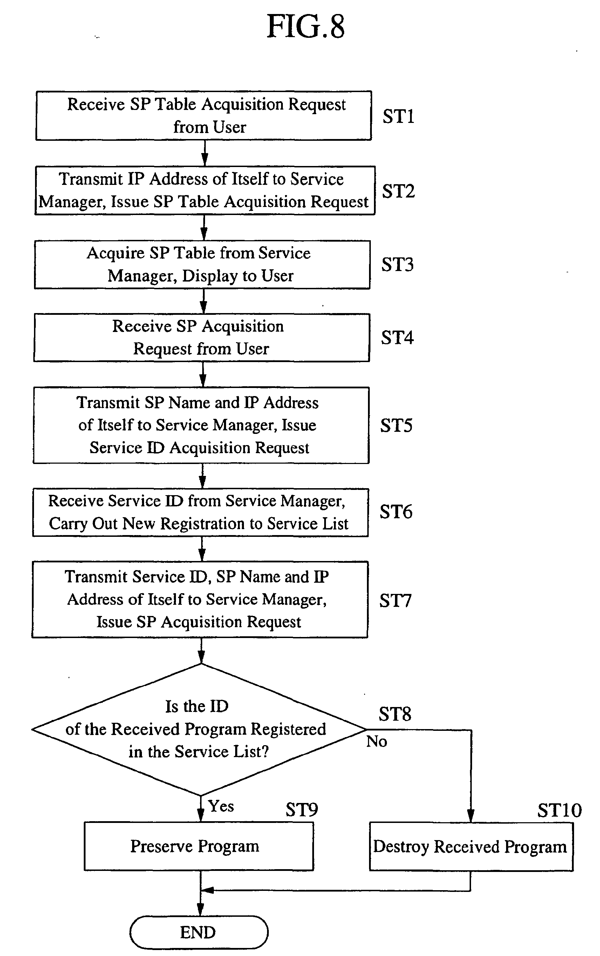

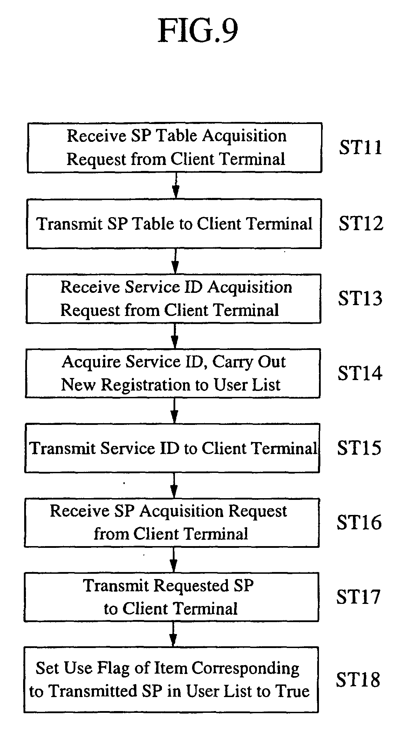

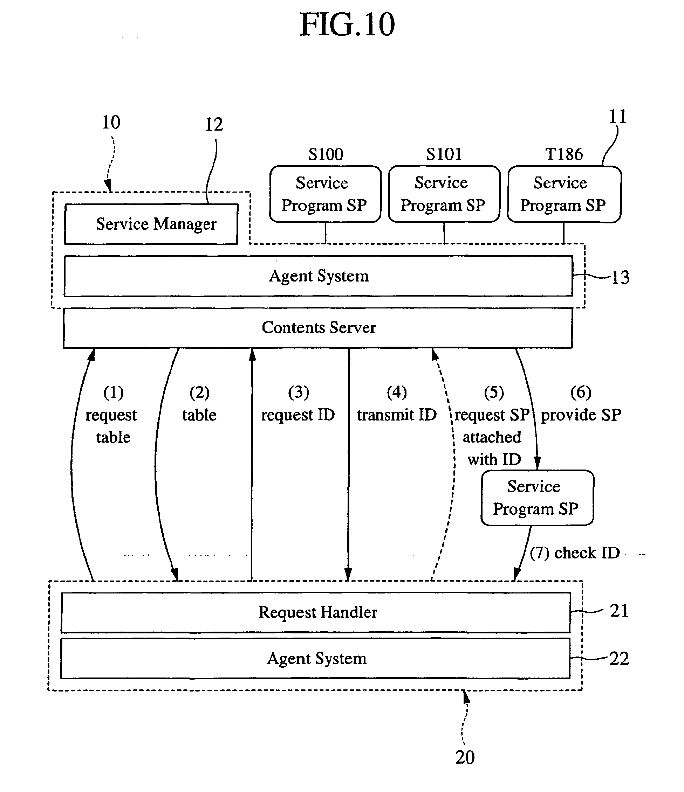

Next, a description will be given for the operating principle (the embodiment of the method of the present invention) of the embodiment described above. Fig. 8 is a flowchart showing the processing function of the request handler 21, and Fig. 9 is a flowchart showing the processing function of the service manager 12. Further, Fig. 10 shows the operation order between the server 10 and a client terminal 20.

As shown in the drawings, when the user inputs a service program table acquisition request to the client terminal 20, the service program table acquisition function portion 24a of the service program managing portion 24 receives this request via the user interface 23 (ST1). In accordance with the receipt of this request, the service program table acquisition function portion 24a issues a table acquisition request to the server 10 (service manager 12) (ST2: (1) in Fig. 10).

The service manager 12 (service program table acquisition function portion 14d) that receives this table acquisition request (ST11) accesses the service program list memory portion 14a, acquires a table, and transmits the service program table to the client terminal 20 (ST12: (2) in Fig. 10).

The client terminal 20 (service program table acquisition function portion 24a) that acquires the service program table displays this table to the user via the user interface 23 (ST3).

Because the user selects (purchases) a required service program from the displayed table, the selection is received by the ID acquisition function portion 25a via the user interface 23 (ST4), and a service ID acquisition request is issued to the service manager 12 (ST5: (3) in Fig. 10).

This request is received by the ID acquisition function portion 15b of the service manager 12 (ST13), and then the service ID created by operating the ID issuing function portion 15a is stored together with the service program name and the used address in the user list memory portion 16 (ST14). Then, the service ID is transmitted to the communicating client terminal 20 (ST15: (4) in Fig. 10).

This transmitted-in service ID is received by the ID acquisition function portion 25a of the client terminal 20, and this service ID and the service program name are correlated and registered in the service list memory portion 26 (ST6). Next, the ID acquisition function portion 25a transfers the acquired information (service program name + service ID) to the service program acquisition function portion 24b, and the service program acquisition function portion 24b that received this information issues a service program acquisition request to the server 10 (ST7: (5) in Fig. 10).

This acquisition request is received by the service program acquisition function portion 14b of the server 10 (ST16), and then the requested service program is transmitted together with the service ID to the communicating client terminal 20 only in the case where the acquired service ID, the service program name and the used address match (ST17: (6), (7) in Fig. 10). Further, although it is not mentioned in the flowcharts, in the case where there is no match, an error process is carried out, and the transmission of the service program is not carried out. Further, the data structure of the user list shown in Fig. 4 correlates the three items of information of the service ID, the service program name and the used address, but a use flag of whether or not transmission to the user (client terminal 20) has been actually executed is also provided, and such use flag may be raised (ST18). In this way, in the case where program distribution is executed as a business, during registration in the user list, those items having raised use flags can be used for accounting as actual sold items.

On the other hand, the service program acquisition function portion 14b of the client terminal 20 that received the service program attached with a service ID judges whether or not there is a legitimate item (ST8), and in the case of a legitimate item, the received program is preserved (ST9), and in the case of an illegal item, the received program is destroyed (ST10).

Further, when a correspondence of each processing portion is attached to each processing step described above, steps 1 - 3 are the processing functions of the service program table acquisition function portion 24a, steps 4 ∼ 6 and part of step 7 are the processing functions of the ID acquisition function portion 25a, and part of step 7 and steps 8 ∼ 10 are the processing functions of the service program acquisition function portion 24b. Further, steps 11 and 12 are the processing functions of the service program table acquisition function portion 14d, steps 13 ~ 15 are the processing functions of the ID acquisition function portion 15b, and steps 16 ∼ 18 are the processing functions of the service program acquisition function portion 14b.

Further, as is clear from the embodiment described above, the input process of the user is completed merely by inputting a service program table display request, and then inputting the service program name to be used (purchased) from those in the table, and because the request to issue a service ID for security, the management of issued service IDs and the check of the program finally sent in are all executed at the system side, processing becomes simple. Moreover, the two processes described above can be carried out practically by the simple process of inputting a number, or scrolling the cursor and executing selection at a required position.

Furthermore, in the present embodiment, because the service programs (SP) provided to the client terminals 20 are agents, they are automatically executed after being transferred to the client terminals 20. The principle (process) of automatic execution is as follows below.

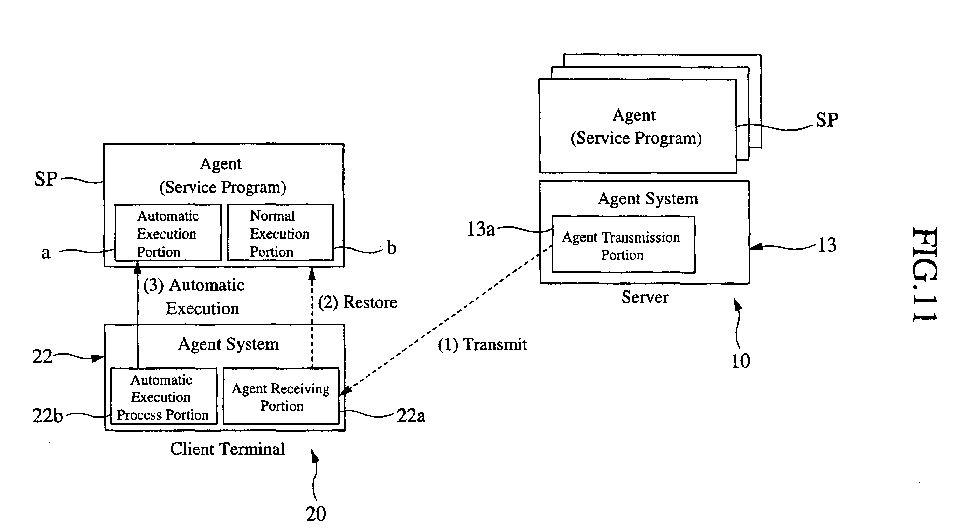

Namely, as shown in Fig. 11, because an agent transmission portion 13a of the agent system 13 of the server 10 transmits a related service program (SP) to the client terminal 20, this is received by an agent receiving portion 22a of the agent system 22 of the client terminal 20.

Then, the agent receiving portion 22a restores the received agent (service program (SP) ) to an executable state, and carries out storage in a prescribed memory area of the client terminal 20. This restored agent (service program (SP) ) has an automatic execution portion a and a normal execution portion b. The automatic execution portion a carries out program initialization and system setup immediately after downloading, and the normal execution portion b executes the actual service (the original process required by the user).

Next, an automatic execution process portion 22b of the agent system 22 executes the automatic execution portion a of the transferred and restored service program SP. In this way, the service program (SP) is automatically executed without receiving an execution command from the user. Further, in the case where, for example, there is also an execution command of the normal execution portion b in the process of the automatic execution portion a, operations are also automatically continued for the normal execution portion b.

Each of the embodiments described above were described with the assumption that they are all in an installed state in an apparatus, but a program can be arranged to have a computer execute each of the processes (e.g., the processes for executing the flowchart shown in Fig. 9) in the server 10 described above, and such program may be provided by being recorded on a prescribed recording medium.

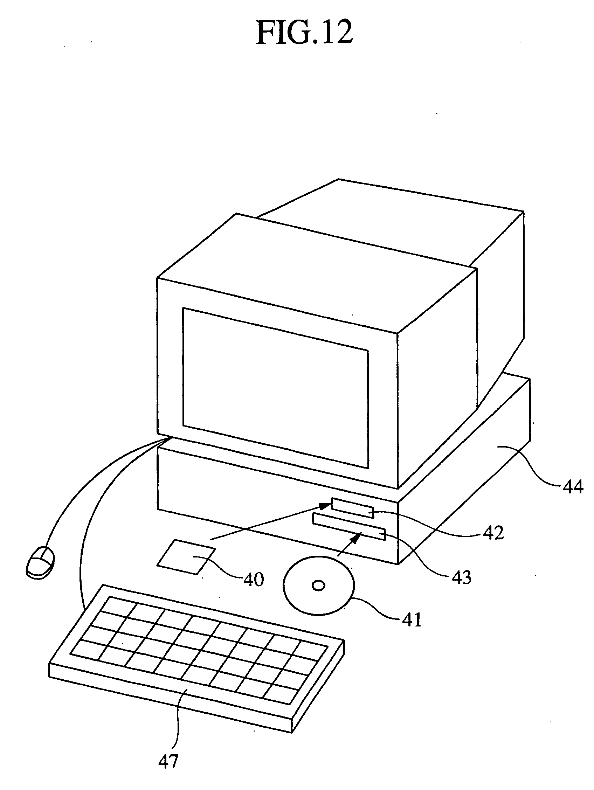

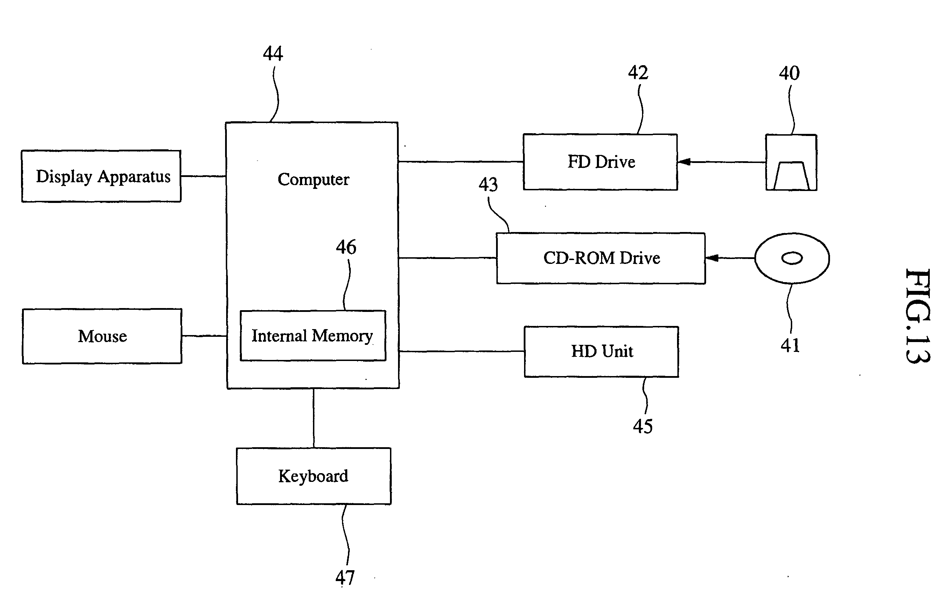

Namely, as shown in Fig. 12 and Fig. 13, the recording medium includes a floppy disk (FD) 40 and a CD-ROM 41 and the like, and the program stored on such recording medium 40, 41 is installed in a (built-in) HD unit 45 connected to a computer 44 via a FD drive 42 or a CD-ROM drive 43, and in this way, the computer 44 forms the server 10 described in the embodiments described above.

Specifically, the service manager 12, the agent system 13 and the like in the embodiments are installed in the HD unit 45, and these are transferred from the HD unit 45 to an internal memory 46 with each use for example, and it is possible to carry out various processes therein at high speed. Further, the service program memory portion 11 is achieved by the HD unit 45 and the like. Further, the symbol 47 in the drawings is a keyboard, and inputs received from this keyboard operate the service program registration/deletion function portion 14c, whereby the registration/deletion of the service program list is executed.

### INDUSTRIAL APPLICATION

In this invention, by providing a program distribution system which uses an agent system, it is possible to easily carry out downloading and the like of programs and other information to terminals. Furthermore, in this invention, in the distribution of programs, a service ID is used, and because the provision and acquisition of programs are carried out on the condition that a correct service ID is attached, security is also improved.

## Claims

1. A program distribution system which distributes a program from a server to client terminals, wherein:
said server and said client terminals are provided with an agent system, and the distribution of said program is carried out by the agent system;
said server has a function which transmits a service ID uniquely determined inside the distribution system before the transmission of said program, and a function which, in the case where there is an acquisition request for a program attached with the transmitted service ID, transmits said program together with the service ID to said client terminal making the acquisition request; and
said client terminals are equipped with a function which makes a request for the issuing of a service ID before the request of a required program, a function which acquires the service ID transmitted in from said server, and issues an acquisition request for the program attached with the acquired service ID, and a function which authorizes the execution of a program only in the case where the received program is attached with a service ID matching the service ID attached at the time of said acquisition request.

2. A server equipped with an agent system for distributing a program to client terminals, wherein:
said server is equipped with a function which transmits a service ID uniquely determined inside the distribution system before the transmission of said program, and
a function which, in the case where there is an acquisition request for a program attached with the transmitted service ID, transmits said program together with the service ID to the client terminal making the acquisition request.

3. A program procurement apparatus equipped with an agent system which receives the distribution of a program from a server, comprising:
a function which makes a request for the issuing of a service ID before the request of a program;
a function which acquires the service ID transmitted in from said server, and issues an acquisition request for the program attached with the acquired service ID; and
a function which authorizes the execution of a program only in the case where the received program is attached with a service ID matching the service ID attached at the time of said acquisition request.

4. A client terminal which receives the distribution of a program from a server, comprising:
the program procurement apparatus described in Claim 3, wherein the acquisition of a program distributed from said server is carried out by the program procurement apparatus.

5. A recording medium which is readable by a computer and which stores a program for a program distribution system which includes a command for the computer to execute:
a process which transmits a service ID uniquely determined inside the distribution system before the transmission of a program; and
a process which, in the case where an acquisition request for a program attached with the transmitted service ID is received, transmits said program together with the service ID to the client terminal making the acquisition request.

6. A program distribution method for distributing a program from a server to client terminals, wherein:
said client terminals make a request for a service ID to the server before program distribution;
said server transmits a server ID to said client terminals in accordance with the requests from said client terminals;
said client terminals make a request for the distribution of a program attached with the acquired service ID to said server;
said server transmits a program attached with a service ID to said server in accordance with the requests from said client terminals; and
said client terminals execute the previously received program in the case where the service ID sent in together with the received program matches the previously acquired service ID, and destroys the received program in the case where there is no match.
